**Europäisches Patentamt**

**European Patent Office**

**Office européen des brevets**

(19)

(11) Veröffentlichungsnummer: **0 037 369**
**A1**

(12) ## EUROPÄISCHE PATENTANMELDUNG

(21) Anmeldenummer: **81730031.2**

(22) Anmeldetag: **09.03.81**

(51) Int. Cl.³: **H 02 G 1/14**

(30) Priorität: **28.03.80 DE 3012739**

(43) Veröffentlichungstag der Anmeldung:
**07.10.81 Patentblatt 81/40**

(84) Benannte Vertragsstaaten:
**AT CH FR GB IT LI NL SE**

(71) Anmelder: **SIEMENS AKTIENGESELLSCHAFT Berlin und München**
**Postfach 22 02 61**
**D-8000 München 22(DE)**

(72) Erfinder: **Waligora, Hans-Joachim**
**Schweidnitzer Weg 15**
**D-8520 Erlangen(DE)**

(54) **Montagewerkzeug für Garnituren geschirmter Starkstromkabel.**

(57) Zum Aufschieben vorgefertiger Garnituren auf die Enden von geschirmten Starkstromkabeln wird ein Werkzeug verwendet, das einen auf dem Kabel festklemmbaren Führungskörper (8, 9) und einen Kipphebelantrieb (3, 4) mit zwei Zugstangen (5) zum Erfassen der Garnitur aufweist. Der Kipphebelantrieb wird von zwei Griffen (1,2) handelsüblicher Handpistolen gebildet, deren Gehäuse (7) über die eine Hälfte (8) einer achsparallel zu den Gehäusen angeordneten Schelle (8,9) miteinander verbunden sind.

FIG 1

EP 0 037 369 A1

SIEMENS AKTIENGESELLSCHAFT
Berlin und München

Unser Zeichen
VPA 80 P 4713 E

Montagewerkzeug für Garnituren geschirmter Starkstromkabel

## 1. Anwendungsgebiet

Die Erfindung liegt auf dem Gebiet der Montagetechnik für elektrische Kabel und ist bei der konstruktiven Ausgestaltung eines Werkzeuges zum Aufschieben einer vorgefertigten Kabelgarnitur oder eines vorgefertigten Garniturenteiles auf das entsprechend zubereitete Ende eines geschirmten Starkstromkabels oder einer geschirmten Kabelader anzuwenden.

## 2. Technischer Hintergrund

Der zunehmende Einsatz kunststoffisolierter elektrischer Kabel in Nieder-, Mittel- und Hochspannungskabelnetzen hat auch zur Entwicklung neuartiger Kabelgarnituren geführt, deren wesentliches Merkmal darin zu sehen ist, daß sie auf entsprechend zubereitete Kabelenden als vorgefertigte Teile aufgeschoben oder aufgesteckt werden können und zu diesem Zweck elastisch aufweitbar sind. Dies gilt sowohl für Endenabschlüsse als auch für Verbindungsmuffen. Beim Aufschieben derartiger Garnituren oder Garniturenteile sind mitunter erhebliche Kräfte aufzuwenden. Um diese Kräfte besser beherrschen zu können, ist ein als "Aufschiebevorrichtung" bezeichnetes Werkzeug bekannt, das im wesentlichen aus einem Führungskörper aus U-förmigem Profilträger mit darauf montiertem Halteböck für das Kabel und daran befestigtem einarmigen Hebel besteht, wobei der Hebel in Längsrichtung des Profilträgers kippbar und mit einer Aufnahmevorrichtung für ein

Zm 3 Lo / 27.3.1980

Garniturenteil versehen ist (Montagebeschreibung "Quick Spleiss" der Firma 3M). Dieses bekannte Werkzeug ist verhältnismäßig massiv aufgebaut und die Schiebekräfte werden ohne große Untersetzung aufgebracht.

3. Darstellung der Erfindung

a) Aufgabe

Ausgehend von dem bekannten Werkzeug zum Aufschieben einer vorgefertigten Kabelgarnitur oder eines vorgefertigten Garniturenteiles auf das entsprechend zubereitete Ende eines geschirmten Starkstromkabels oder einer geschirmten Kabelader, das aus einem auf dem Kabel oder der Kabelader festklemmbaren Führungskörper mit einem mittels eines Hebelmechanismus in Längsrichtung des Führungskörpers bewegbaren und mit der Kabelgarnitur oder dem Garniturenteil lösbar verbindbaren Führungsteil besteht, liegt der Erfindung die Aufgabe zugrunde, das Werkzeug durch konstruktive Vereinfachung handlicher zu gestalten und dabei eine stärkere Untersetzung der aufzubringenden Kräfte zu erreichen.

b) Lösung der Aufgabe

Zur Lösung dieser Aufgabe ist gemäß der Erfindung vorgesehen, daß der Führungskörper aus zwei achsparallel zueinander angeordneten Kipphebelantrieben für jeweils eine Zug-/Druckstange besteht, deren Gehäuse über die eine Hälfte einer achsparallel hierzu angeordneten Schelle miteinander verbunden sind, und daß die die Führungsteile des Werkzeuges bildenden Zug-/Druckstangen der beiden Kipphebelantriebe an ihrem ziehenden Ende jeweils mit einem Befestigungselement zum form- oder kraftschlüssigen Erfassen der Kabelgarnitur bzw. des Garniturenteiles versehen sind.

c) Vorteile und weitere Ausgestaltung

Bei Verwendung eines derart ausgebildeten Werkzeuges kann die Montage einer Kabelgarnitur von einem einzigen Monteur durchgeführt werden, wobei durch die Verwendung zweier Kipphebelantriebe einerseits eine beidhändige Bedienung des Werkzeuges und andererseits eine ausreichende Untersetzung der Handkräfte gegeben ist, so daß auch größte Aufschiebekräfte spielend aufgebracht werden können.

Eine besonders zweckmäßige und handliche Ausgestaltung des neuen Werkzeuges erhält man dann, wenn man als Kipphebelantriebe zwei Griffe handelsüblicher Handpistolen verwendet, wie sie für Kartuschenspritzgeräte üblich sind. Derartige Handpistolen werden beispielsweise von der Firma Teroson vertrieben und sind in dem Prospekt "Pistolen-Kombinationssatz-70" Nr. HB 62/676/5 M vom Juni 1976 beschrieben.

d) Ausführungsbeispiel

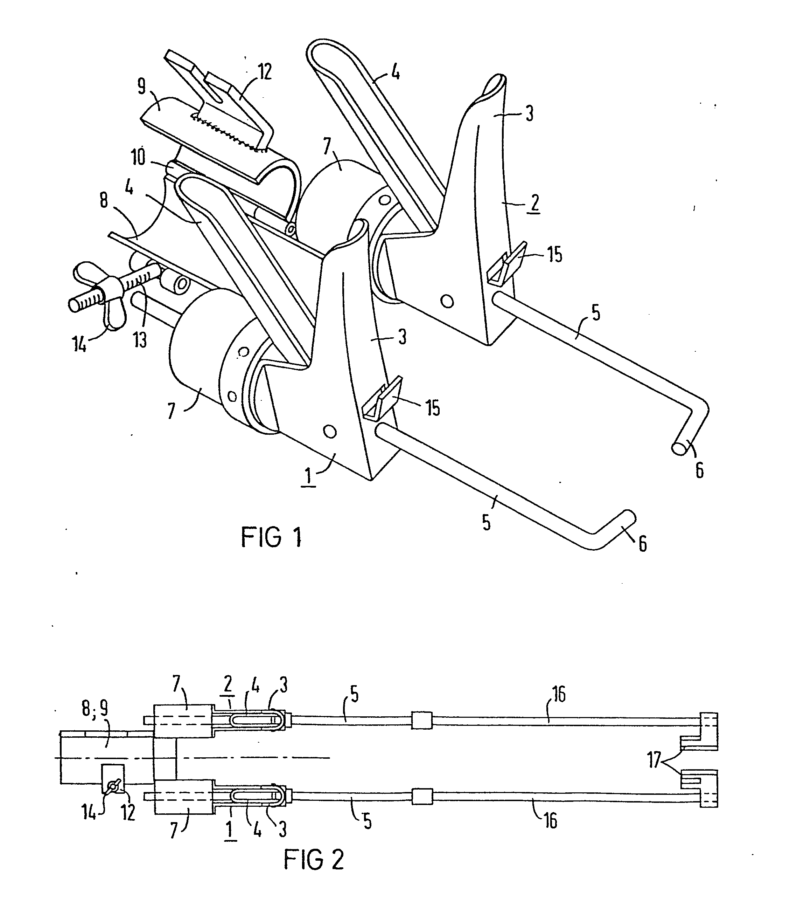

Ein Ausführungsbeispiel des neuen Werkzeuges ist in der Figur 1 in perspektivischer Ansicht dargestellt. Eine Variante dieser Ausführungsform zeigt Figur 2.

Das Werkzeug besteht im wesentlichen aus zwei handelsüblichen Handpistolen 1 und 2, die über eine zweiteilige Schelle 8/9 miteinander verbunden sind. Die Handpistolen sind dabei parallel zueinander angeordnet, wobei die Achse der zweiteiligen Schelle parallel zu den Achsen der Handpistolen verläuft. Das Unterteil 8 der zweiteiligen Schelle ist mit den Gehäusen 7 der Handpistolen verschweißt, während das Oberteil 9 über ein Scharnier 10 mit dem Unterteil verbunden ist. Die zweiteilige Schelle kann mit Hilfe der Lasche 12 und des Kniehebels 13, auf dem die Flügelmutter 14 angeordnet ist, geschlossen und auf diese Weise auf einer Kabelader befestigt werden.

Jede Handpistole besteht aus einem feststehenden Griffteil 3 und einem beweglichen Griffteil 4, wobei bei Betätigung des beweglichen Griffteiles 4 im Innern des Gehäuses ein nicht näher dargestellter Kipphebelantrieb betätigt wird, mit dem die Zugstangen 5 in Längsrichtung der Handpistolen bewegt werden. Durch Betätigen der Kipphebelplatte 15 kann die jeweilige Zugstange 5 in ihre Ausgangsposition gebracht werden.

Am ziehenden Ende der Zugstangen 5 sind die Nasen 6 vorgesehen, die bei der Montage in die auf ein Kabelende aufzuschiebende Kabelgarnitur eingreifen. Hierzu können beispielsweise an der Kabelgarnitur Laschen mit jeweils einer Bohrung vorgesehen sein, in die die Ansätze 6 eingreifen. Man kann aber am Ende der Zugstangen 5 auch spezielle Druckstücke anordnen, mit denen die Kabelgarnitur stirnseitig erfaßt wird. Weiterhin ist es möglich, am Ende der Zugstangen 5 eine Schelle vorzusehen, die an der aufzuschiebenden Kabelgarnitur verankert wird.

Ein Ausführungsbeispiel hierzu zeigt Fig. 2, in der die Zugstangen 5 mit Verlängerungen 16 versehen sind, an deren Enden sich die Kopfformteile 17 befinden. Diese Kopfformteile sind speziell dazu geeignet, stirnseitig in einen aufschiebbaren vorgefertigten Muffenkörper einzugreifen.

2 Figuren
2 Patentansprüche

Patentansprüche

1. Werkzeug zum Aufschieben einer vorgefertigten Kabelgarnitur oder eines vorgefertigten Garniturenteiles auf das entsprechend zubereitete Ende eines geschirmten Starkstromkabels oder einer geschirmten Kabelader, bestehend aus einem auf dem Kabel oder der Kabelader festklemmbaren Führungskörper mit einem mittels eines Hebelmechanismus in Längsrichtung des Führungskörpers bewegbaren und mit der Kabelgarnitur oder dem Garniturenteil lösbar verbindbaren Führungsteil, d a d u r c h   g e k e n n z e i c h n e t , daß der Führungskörper aus zwei achsparallel zueinander angeordneten Kipphebelantrieben (1, 2) für jeweils eine Zug-/Druckstange (5) besteht, deren Gehäuse (7) über die eine Hälfte (8) einer achsparallel hierzu angeordneten Schelle (8, 9) miteinander verbunden sind, und daß die die Führungsteile des Werkzeuges bildenden Zug-/Druckstangen (5) der beiden Kipphebelantriebe an ihrem ziehenden Ende jeweils mit einem Befestigungselement (6) zum form- oder kraftschlüssigen Erfassen der Kabelgarnitur bzw. des Garniturenteiles versehen sind.

2. Werkzeug nach Anspruch 1, d a d u r c h   g e - k e n n z e i c h n e t , daß als Kipphebelantriebe zwei Griffe (1, 2) handelsüblicher Handpistolen von Kartuschenspritzgeräten verwendet sind.

FIG 1

FIG 2

**Europäisches Patentamt**

**EUROPÄISCHER RECHERCHENBERICHT**

| Kategorie | Kennzeichnung des Dokuments mit Angabe soweit erforderlich, der maßgeblichen Teile | betrifft Anspruch |
|---|---|---|
| | <u>US - A - 3 692 348</u> (DOTY)<br><br>* Spalte 1, Zeilen 38-68; Spalte 2, Zeilen 1-35; Figuren 1-9 *<br><br>-- | 1 |
| | <u>DE - A - 2 459 782</u> (THOMPSON; GILLEMOT)<br><br>* Seite 9, Absätze 2,3; Seite 10; Figur 5 *<br><br>-- | 2 |
| A | <u>DE - A - 2 235 108</u> (JOSLYN)<br><br>* Seite 17, Absatz 2; Seiten 18-22; Figuren 13-17 * | 1 |

**EINSCHLÄGIGE DOKUMENTE**

**KLASSIFIKATION DER ANMELDUNG** (Int. Cl.³)

H 02 G 1/14

**RECHERCHIERTE SACHGEBIETE** (Int. Cl.³)

H 02 G   1/14
              15/06
              15/10
F 16 L   1/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-07-1981 | LOMMEL |

EPA form 1503.1   06.78